(19) Europäisches Patentamt

European Patent Office

Office européen des brevets

(11) EP 1 875 634 B1

(12) FASCICULE DE BREVET EUROPEEN

(45) Date de publication et mention de la délivrance du brevet:
**27.11.2013 Bulletin 2013/48**

(21) Numéro de dépôt: **06743358.1**

(22) Date de dépôt: **20.04.2006**

(51) Int Cl.:
***H04B 7/212*** *(2006.01)*

(86) Numéro de dépôt international:
**PCT/EP2006/061689**

(87) Numéro de publication internationale:
**WO 2006/111554 (26.10.2006 Gazette 2006/43)**

(54) **PROCEDE DE SYNCHRONISATION ET D'ASSERVISSEMENT DANS LES SYSTEMES DE COMMUNICATIONS SANS FIL**

VERFAHREN ZUR SYNCHRONISATION UND STEUERUNG IN DRAHTLOSEN KOMMUNIKATIONSSYSTEMEN

METHOD FOR SYNCHRONISATION AND CONTROL IN WIRELESS COMMUNICATION SYSTEMS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.04.2005 FR 0504074**

(43) Date de publication de la demande:
**09.01.2008 Bulletin 2008/02**

(73) Titulaire: **THALES**
**92200 Neuilly sur Seine (FR)**

(72) Inventeur: **BRUAS, Patrick**
**F-93190 Livry Gargan (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 4 292 683    US-A- 4 811 365**
**US-A- 5 878 034    US-A- 6 127 967**

**Description**

L'invention concerne notamment un procédé de synchronisation dans les communications sans fil et notamment dans le domaine des satellites où l'on cherche la synchronisation et l'asservissement entre une station maître horaire du réseau et un abonné du réseau de télécommunications.

Elle est utilisée notamment dans le domaine des télécommunications utilisant une forme d'onde OFHMA (accès multiple à saut de fréquence orthogonale ou Orthogonal Frequency Hopping Multiple Access).

Dans le domaine des télécommunications utilisant des formes d'onde de type OFHMA, l'orthogonalité est habituellement assurée par une distribution et un maintien d'heure de type maître-esclave qui fait en sorte que les instants d'arrivée de toutes les porteuses émises par le segment sol dans le même répéteur soient synchrones sur le satellite, ceci avec une précision de synchronisation bien meilleure que la durée du trou de palier de la forme d'onde EVF (à évasion de fréquence). Ceci garantit un auto-brouillage nul du réseau et donc une meilleure capacité du réseau. La gestion d'heure est donc de type centralisé.

Le moyen généralement utilisé pour remplir la condition d'orthogonalité précédente est une boucle d'asservissement entre le maître horaire du réseau et chaque abonné (esclave) du réseau.

Etant donnée la latence de la boucle d'asservissement, toute variation du Temps de Transit due au mouvement du satellite (par exemple, l'inclinaison de quelques degrés du plan orbital qui crée le fameux « huit » du satellite) ou du porteur (par exemple, la vitesse du vaisseau) dans un système asservi du 1er ordre se traduit par un régime permanent avec une erreur de boucle incompatible avec l'exigence de précision de synchronisation requise par la condition d'orthogonalité.

Le double problème à résoudre est donc d'assurer un temps de convergence de boucle satisfaisant, en même temps qu'une erreur de boucle nulle ou quasi-nulle en régime permanent, avec une marge de stabilité correcte. En effet, le temps de convergence de cette boucle d'asservissement est un élément prépondérant dans la performance de temps de rentrée dans le réseau d'une station.

Il est connu de l'art antérieur d'utiliser un asservissement du second ordre pour annuler cette erreur de boucle. Toutefois, ceci est réalisé au détriment du temps de convergence de la boucle qui va augmenter de manière significative pour maintenir une marge de stabilité suffisante de la boucle d'asservissement. Les inconvénients de la solution d'asservissement du second ordre sont notamment sa complexité et surtout l'allongement du temps de convergence.

Un dépassement important avec plusieurs rebonds peut aussi survenir pour certains réglages de gains de boucle.

Le document US 4 811 365 décrit un procédé de synchronisation dans les communications sans fil.

Le procédé selon l'invention utilise notamment une information supplémentaire qui est la vitesse de variation du trajet satellite-porteur permettant de faire converger vers zéro la boucle longue d'un abonné. Cette vitesse de variation est trouvée, par exemple, en calculant la dérivée de la position temporelle de réception de la liaison de service EVF dite « balise horaire », qui est émise par le maître de l'heure en diffusion permanente vers tous les abonnés du réseau.

L'invention concerne notamment un procédé de synchronisation dans un système de télécommunications par satellite transparent comprenant une station maître et une ou plusieurs stations abonné, le système utilisant pour échanger les informations une forme d'onde de type à saut de fréquence orthogonale, un abonné et le maître échangeant des messages de demande d'heure et de réponse d'heure, l'heure d'émission de chaque abonné étant asservie par une boucle longue pilotée par le maître de manière à ce que tous les signaux du réseau arrivent sensiblement synchrones dans le répéteur du satellite, la station maître déterminant l'erreur de boucle AB(n) d'un abonné en déterminant le décalage entre l'instant de réception de la demande d'heure de la station abonné et l'instant de réception de sa propre balise horaire, caractérisé en ce que :

• une station abonné prend en compte la valeur de décalage (erreur de boucle) reçue dans la réponse d'heure et la vitesse de variation du trajet satellite-porteur déduite de la réception de la balise horaire, pour procéder à un recalage de son heure d'émission de la nouvelle demande d'heure, et en ce que

• la station maître ou une station abonné compare la valeur de l'erreur de boucle mesurée à une valeur seuil et dès que la valeur d'erreur de boucle pour une station abonné donnée est inférieure ou égale à la valeur seuil, la station maître donne l'autorisation d'émettre son trafic à ladite station abonné.

On détermine l'heure d'émission qui permet d'annuler l'erreur de boucle en régime permanent par exemple en mettant en oeuvre à chaque tour de boucle (c'est-à-dire chaque échange demande/réponse d'heure) l'algorithme suivant :

$$H^B_{emi}(n+1) = H^B_{emi}(n) - Go\, B(n-k) - C(n) \qquad [E3]$$

où

Go est le gain de boucle

C(n) un terme de correction qui estime ici la variation du trajet satellite-abonné et qui est égal selon l'algorithme de l'invention à :

$$C(n) = Hrec\ (n) - Hrec\ (n-1)$$

$H^B$emi : heure d'émission de la station abonné

B(n) erreur de boucle pour la station abonné B

Hrec : heure de réception par l'abonné, de la balise horaire émise par le maître

« k » : latence de la boucle exprimée en nombre de tours de boucle = durée qui sépare la mesure du décalage de la prise en compte du recalage.

L'étape de comparaison de l'erreur de boucle à la valeur seuil est exécutée par exemple sur plusieurs tours de boucle consécutifs.

La valeur seuil est par exemple choisie inférieure à la durée du trou de palier de la forme d'onde.

La forme d'onde est par exemple une forme d'onde OFHMA.

L'invention concerne aussi un dispositif permettant de synchroniser une station maître et une ou plusieurs stations abonné dans un réseau de communications sans fil, comportant au moins un processeur disposé au niveau de chacune des stations abonné, un processeur étant adapté à calculer le recalage d'heure d'émission de chaque abonné en tenant compte de la vitesse de variation du trajet satellite-abonné, un processeur disposé côté station maître, adapté à mesurer l'erreur de boucle et un processeur adapté à comparer la valeur de l'erreur à une valeur seuil et dès que la valeur d'erreur de boucle, pour une station abonné, est inférieure ou égale à la valeur seuil, à donner l'autorisation à ladite station abonné d'émettre son trafic.

Le processeur adapté à comparer la valeur de l'erreur de boucle à la valeur seuil est disposé dans la station maître ou sur une station abonné.

L'invention présente notamment les avantages suivants : elle permet un temps de convergence sensiblement identique à celui d'une boucle d'asservissement du premier ordre tout en assurant une erreur de boucle nulle compatible du critère d'orthogonalité.

La performance de temps de rentrée dans le réseau d'une station est significativement améliorée. L'idée est simple à mettre en oeuvre. La stabilité de la boucle est meilleure.

D'autres caractéristiques et avantages de la présente invention apparaîtront mieux à la lecture de la description qui suit d'un exemple de réalisation donné à titre illustratif et nullement limitatif annexé, des figures qui représentent :

- La figure 1, une représentation des lois EVF orthogonales,

- La figure 2, la représentation d'un canal de diffusion d'heure synchrone,

- La figure 3, un synoptique de l'acquisition d'heure par boucle longue et la figure 4, les étapes mises en oeuvre,

- La figure 5, une implémentation de l'asservissement d'heure par boucle longue,

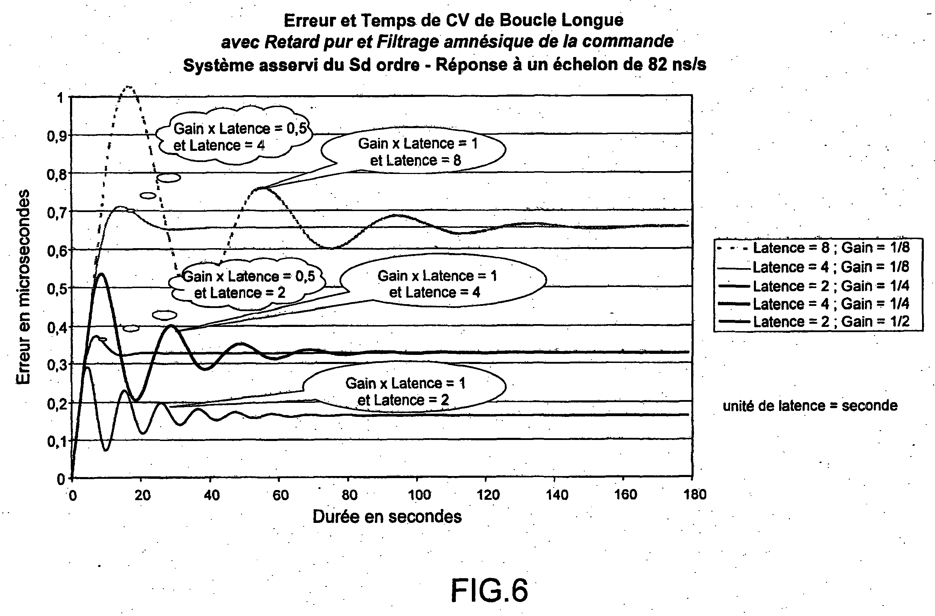

- La figure 6, une réponse à un échelon de la boucle longue,

- La figure 7, des résultats de simulation comparant la convergence obtenue selon l'art antérieur et en mettant en oeuvre le procédé selon l'invention, et

- La figure 8, une représentation de la latence dans une boucle longue.

En résumé, l'idée de l'invention consiste notamment à utiliser une information supplémentaire par exemple la vitesse de variation du trajet satellite-porteur côté abonné, pour obtenir une synchronisation plus rapide de la boucle. Cette information peut être obtenue en calculant la dérivée de la position temporelle de réception de la liaison EVF dite « balise horaire »  qui est émise par le maître de l'heure en diffusion vers les abonnés du réseau.

Il s'agit, notamment pour cette balise horaire, d'une diffusion permanente d'heure synchrone (désigné en anglo-saxon full-EVF) et implicite (pas de Time-Of-Day explicitement transporté). Toutes les stations abonnés ou utilisateurs du réseau ont leur heure de réception de trafic asservie sur cette balise horaire. Les abonnés sont, par exemple, dés unités de communication, UC, (modulateurs qui émettent chacun une porteuse de trafic). Pour une station, il y a une ou plusieurs UC qui émettent dans le même répéteur et qui ont besoin d'être asservies indépendamment chacune par le maître pour ne pas s'autobrouiller.

De manière générale, le procédé selon l'invention peut être utilisé dans tout système EVF orthogonal (OFHMA) de type maître-esclave ou tout autre système utilisant une forme d'onde présentant des caractéristiques semblables à celles des formes d'onde OFHMA.

La technique EVF orthogonal (OFHMA) consiste, dans le contexte des liaisons de télécommunications SATCOM, à synchroniser temporellement et fréquentiellement tous les paliers de saut de fréquence qui arrivent dans le répéteur du satellite, de manière à ce que le chevauchement entre 2 paliers soit plus petit que la durée du trou interpalier de la forme d'onde EVF.

Etant donné le mouvement du satellite (le fameux huit) GEO et/ou le mouvement du porteur de la station du segment terrestre, il est nécessaire d'avoir un maître de l'heure (station NC = « Network Controller ») qui asservit toutes les émissions des abonnés (stations NM = « Network Member ») du réseau avec autant de boucles longues qu'il y a d'abonnés, de manière à respecter le critère d'orthogonalité et donc annuler l'auto-brouillage du réseau pour gagner en capacité.

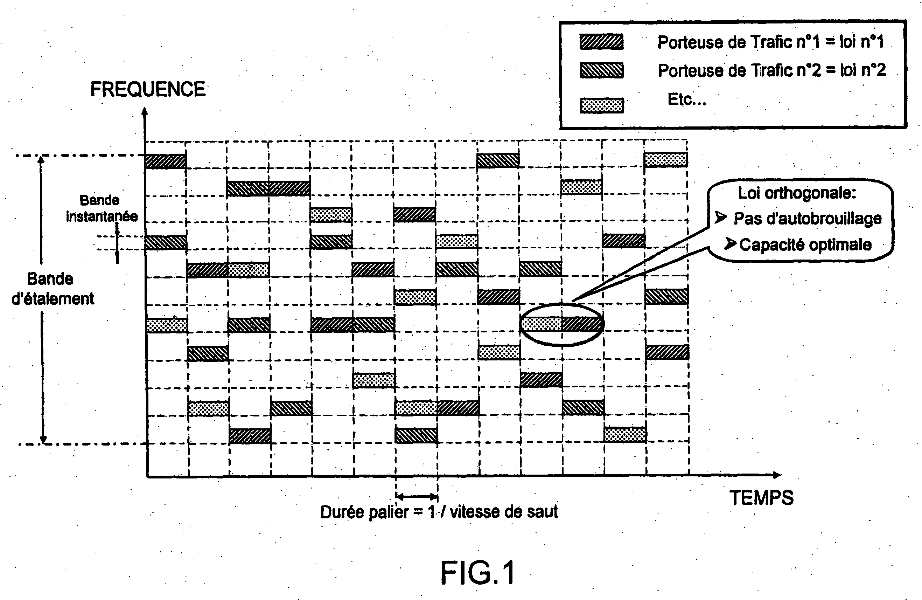

La figure 1, Lois EVF orthogonales (OFHMA), montre dans un diagramme temps-fréquence, un ensemble de liaisons de trafic qui partagent la même bande d'étalement, sans se brouiller mutuellement.

Le maître de l'heure (station NC) émet une balise horaire permanente en EVF qui arrive sur le satellite à l'heure système Ho. La bande d'étalement de l'EVF peut occuper un ou plusieurs répéteurs du satellite. Cette station NC maintient l'heure système notamment à l'aide :

- d'une référence horaire Ho (par exemple, l'échelle de temps internationale « GPS time » ou celle du Temps Universel Coordonné « UTC » modifiée pour la débarrasser des secondes intercalaires et en dériver une échelle de temps continue),

- d'une estimation fine de son temps de transit TT (par exemple, la • mesure de TT par boucle courte).

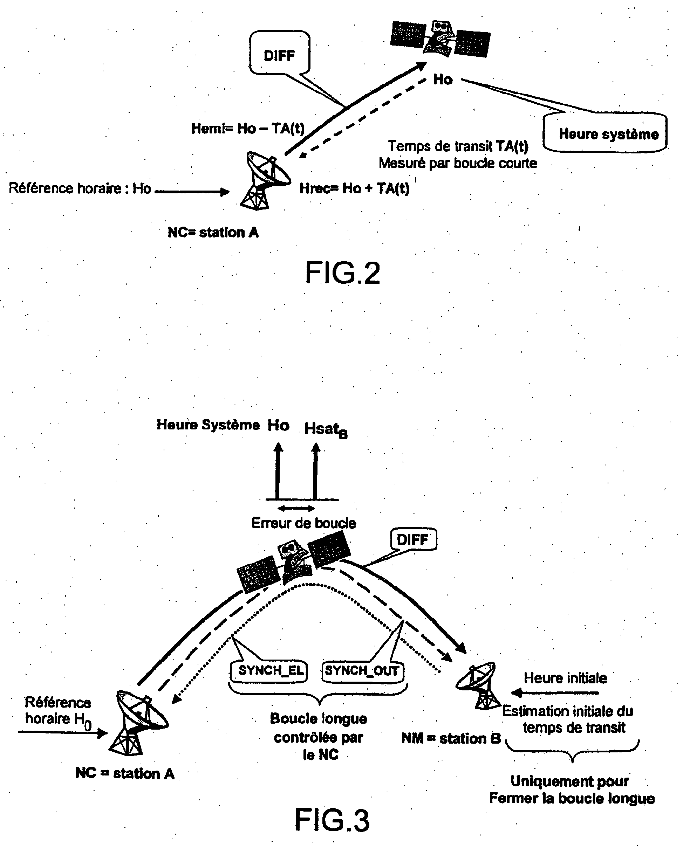

Cette heure système définit l'heure de référence du réseau. Il s'agit d'une heure standard choisie par convention entre tous les abonnés du réseau pour faire l'acquisition d'heure et permettre l'interopérabilité. Ce canal de balise horaire diffusé en permanence est désigné DIFF dans la description. La figure 2 illustre le canal de diffusion d'heure synchrone full-ECCM.

Côté maître de l'heure, étant donné que le temps de transit entre la station maître NC et le satellite varie dans le temps, on compense cette variation en asservissant l'heure d'émission Hémi de la station maître NC sur la mesure du temps de transit TT obtenue par boucle courte (exemple: par écoute de son propre canal DIFF). Ceci permet à la station maître NC de maintenir l'instant d'arrivée du DIFF sur le satellite à l'heure Ho.

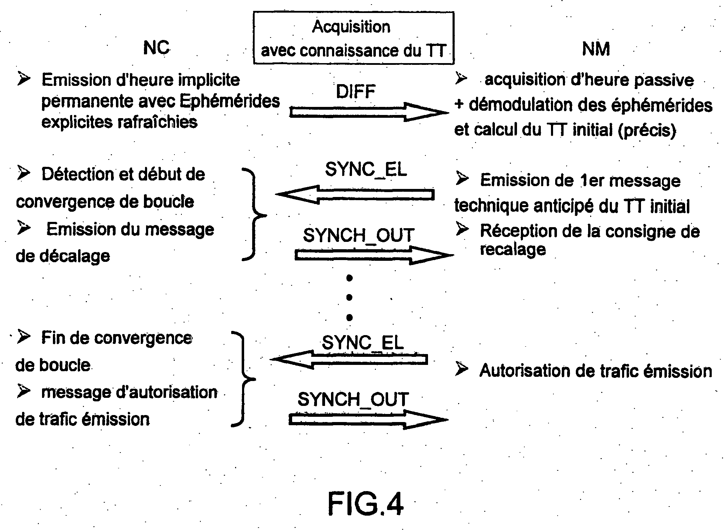

La figure 3 est un synoptique de l'acquisition d'heure par voie radio et la figure 4 regroupe un exemple d'étapes d'acquisition d'heure pour une boucle longue.

Côté abonné (station NM), l'acquisition passive d'heure par voie radio est obtenue, par exemple, par la technique de loi de veille EVF classique qui consiste à chercher une fréquence depuis l'instant $-\Delta T$ jusqu'à l'instant $+\Delta T$, correspondant à l'incertitude temporelle relative entre la station NM et la station NC. Cette incertitude temporelle englobe une incertitude horaire et une incertitude de temps de transit.

En résumé la synchronisation des stations abonné s'effectue :

- en réception, à partir de l'écoute du canal DIFF,

- en émission, par une boucle longue d'asservissement qui est contrôlée par la station maître NC.

Côté station abonné NM, une fois que le canal DIFF est détecté, l'heure de réception Hrec de la station abonné NM est recalée et elle suit l'évolution du canal DIFF grâce au suivi temporel du traitement de signal. La démodulation du canal trafic réception est autorisée. Selon la forme d'onde, le canal de trafic peut être multiplexé avec le canal DIFF ou bien les deux canaux occupent 2 UC (unités de communication) différentes.

Côté NC (station maître), il y a la recherche d'un message technique de demande d'heure par abonné appelé SYNCH_EL «extrémité de liaison» sur une plage de recherche réduite, par exemple +/- 200 $\mu$s, qui doit être compatible avec la précision du temps de transit initial de la station NM.

Côté NM (station abonné), il y a émission d'un message technique de demande d'heure appelé SYNCH_EL qui est anticipé de 2 x TTinit avec TTinit = temps de transit initial estimé généralement par calcul local à partir des éphémérides satellite (calculées en central par la station de contrôle du satellite) reçues avec le DIFF, et de la position géographique locale de la station NM.

Côté NC (station maître), dès qu'un message SYNCH_EL valide a été détecté, alors le NC mesure l'écart entre l'heure de réception du message entrant et l'heure attendue à laquelle il aurait du être reçu s'il n'y avait pas d'erreur de synchronisation.

Cette dernière heure attendue correspond à l'instant de réception du DIFF. Cet écart de boucle $\Delta B(n)$ de chaque abonné, noté aussi $f(t)$ dans la suite du document, est mesuré puis renvoyé avec une latence $\tau$ secondes (correspondant dans l'implémentation à la durée de plusieurs tours de boucle) sélectivement vers le NM dans un message de réponse d'heure appelé SYNCH_OUT (message technique recalant). Par exemple, s'il y a 100 modems abonnés du réseau de synchronisation, alors il y a 100 boucles longues indépendantes pilotées par un maître de l'heure, ici désigné NC. C'est pourquoi l'unité de communication NC nominale doit être redondée par une unité de communication NC de secours (colocalisée ou non colocalisée) en cas de panne, avec un basculement automatique de manière à assurer une continuité des services de trafic et ne pas arrêter tout le réseau dès que la station maître NC tombe en panne.

Côté station abonné NM, dès qu'il reçoit le message technique SYNCH_OUT, il corrige son heure d'émission Hémi en appliquant une consigne $B(n)$ avec un gain de filtrage et l'algorithme de boucle longue (décrit ci-après) pour renvoyer un message SYNCH_EL. La consigne de recalage utilisée est notée $B(n)$ dans la relation [E3] explicitée ci-après.

La boucle longue est dans un régime transitoire durant l'échange de message SYNCH_EL, SYNCH_OUT jusqu'à ce que la boucle converge.

Le critère de convergence de la boucle consiste notamment à observer une erreur de boucle sous un seuil d'acceptation pendant un certain nombre de tours de boucle consécutifs.

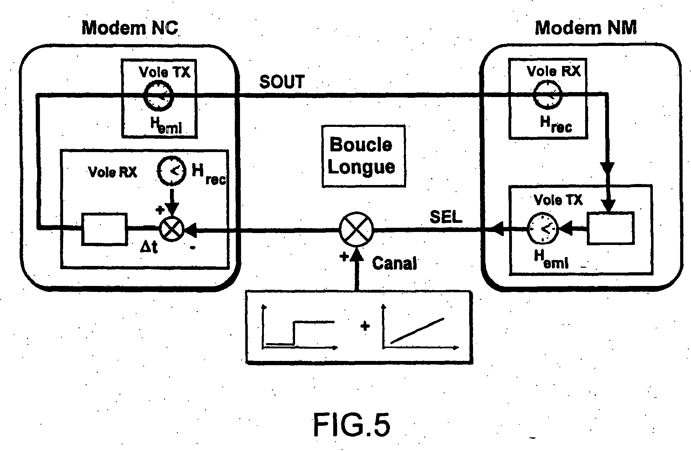

La figure 5 schématise une implémentation de l'asservissement d'heure par boucle longue entre le modem implémenté dans une station abonné et le modem de la station maître du réseau.

Lorsque la station maître constate que la valeur absolue de l'erreur de boucle est inférieure à un certain seuil durant par exemple un certain nombre de tours de boucle successifs, alors la station maître NC avertit la station abonné NM que la boucle a convergé et par conséquent, que la station abonné NM est autorisée à émettre son trafic. Pour cela, un champ d'autorisation d'émission est renseigné, dans le message de réponse SYNCH_OUT par la station maître NC pour autoriser ou non l'unité de communication de la station abonné NM distante à émettre son trafic.

Il y a alors orthogonalité des liaisons au niveau du satellite.

La valeur du seuil est, par exemple, choisie de façon telle qu'elle soit inférieure à la durée du trou de palier de la forme d'onde EVF.

Après le régime transitoire, la boucle passe dans un régime permanent avec une erreur qui est nulle selon l'algorithme de l'invention (appelé algo_03 ci-après).

Pour mettre en oeuvre l'algorithme selon l'invention, chacune des stations abonnés, NM, comprend par exemple un processeur (non représenté pour des raisons de simplification) adapté à calculer le recalage d'heure d'émission de chaque abonné en tenant compte de la vitesse de variation du trajet satellite-abonné. La station maître, NC, comprend un processeur adapté à mesurer l'erreur de boucle et un processeur adapté à comparer la valeur de l'erreur à une valeur seuil et dès que la valeur d'erreur de boucle, pour une station abonné est inférieure ou égale à la valeur seuil, à donner l'autorisation à ladite station abonné d'émettre son trafic.

Une station abonné peut comporter un processeur adapté à exécuter l'opération de comparaison de la valeur de boucle à une valeur seuil.

Les tâches de la station maître et d'une station abonné sont respectivement les suivantes :

• La station maître NC mesure un décalage entre le message technique de demande d'heure, émis régulièrement par une station abonné et l'instant attendu. Ce décalage est envoyé régulièrement dans le message de réponse appelé SYNCH_OUT,

• La station abonné NM utilise la relation [E3] pour effectuer son recalage d'heure,

• La station maître NC compare la valeur du décalage mesurée à une valeur seuil fixée. Avant franchissement du seuil, la station maître interdit à la station abonné d'émettre du trafic. Après franchissement du seuil, la station abonné est autorisée par le maître à émettre son trafic. Le NM n'ayant pas à connaître la valeur du seuil, seule la station maître connaît la valeur seuil et décide d'autoriser la station abonné à émettre son trafic via 1 bit d'information contenu dans le message SYNCH_OUT.

Le procédé fonctionne aussi lorsque c'est la station abonné NM qui exécute l'opération de comparaison de la valeur de décalage mesurée.

Pour déterminer l'erreur de boucle on met en oeuvre les étapes du procédé décrites ci-après.

**Les notations suivantes sont utilisées**

On note respectivement A et B les stations NC (maître de l'heure) et NM (station esclave).

On note f(t) la fonction d'erreur de la boucle = $H^B sat - Ho$ [E1] ou sous la forme discrétisée équivalente B(n) = f(t= nTe) avec :

- Ho = heure système = instant d'arrivée du canal DIFF sur le satellite,
- $H^B sat$ = instant d'arrivée sur le satellite d'une porteuse émise par la station B,
- Te est la période d'échantillonnage du système asservi = durée d'un tour de boucle.

**Equation de boucle analogique**

La fonction d'erreur [E1] devient : $f(t) = H^B emi (t) + T_B - Ho$ en dérivant :

$$\frac{df}{dt}(t) = \frac{d}{dt}(H^B emi) + \frac{dT_B}{dt}(t) \quad [E2]$$

avec
$H^B emi (t)$ = heure d'émission de la station B
$T_B$ = temps de transit de la station B.

Le message de boucle longue B(n) émis par la station maître NC vers une station abonné NM dans le SYNCH_OUT contient le décalage entre l'instant de réception du message reçu SYNCH_EL et l'instant attendu (i.e. l'instant de réception du DIFF via la boucle courte).

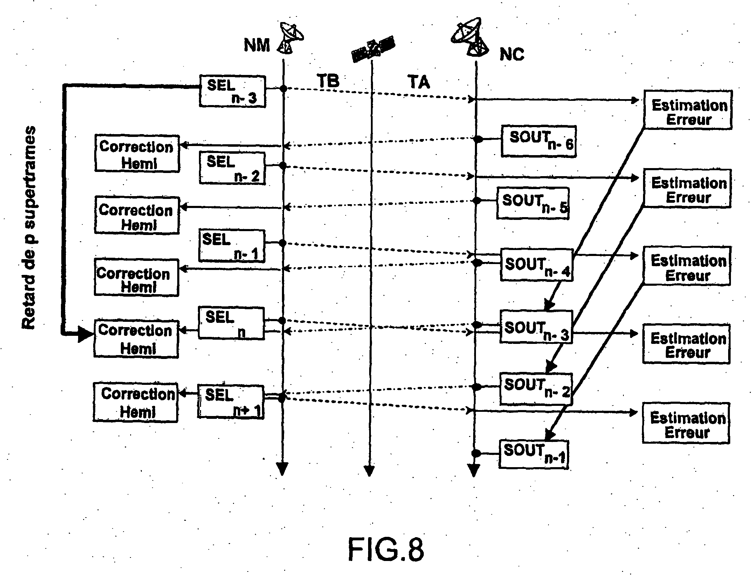

Ce message de boucle longue mesure donc l'erreur d'orthogonalité $f(t-\tau)$ et il sera émis $\tau$ secondes plus tard correspondant à la latence du système avec $\tau = k$ Te qui est illustrée en Figure 8.

L'algorithme implémenté du côté de la station abonné B est le suivant :

$$H^B emi (n+1) = H^B emi (n) - Go\ B(n-k) - C(n) \quad [E3]$$

avec:
Go est le gain de boucle.
C(n) terme de correction qui est égal selon l'algorithme 3 à

$$C(n) = Hrec (n) - Hrec (n-1)$$

avec:
Hrec(n) = heure de réception de la balise horaire (DIFF) par l'abonné.

La relation [E3] équivaut à l'approximation :

$$\Delta T\ \frac{d}{dt}(H^B emi) \approx -Go\ f\ (t-\tau) - C(t) \quad [E4]$$

On normalise la durée du tour de boucle $\Delta T=1$ unité de temps (Te) dans les notations. [E2] et [E4] deviennent :

$$\frac{df}{dt}(t) + Go\ f\ (t-\tau) = \frac{dT_B}{dt}(t) - C(t) \quad [E5]$$

équation de boucle analogique.

Selon un mode de réalisation les équations sont exprimées sous la forme d'une suite récurrente.

En posant :

$$u_n = T_B(n) ; \quad e_n = u_n - u_{n-1} ; \quad s_n = f(n-k) ; \quad c_n = C(n) ; \quad kTe = \tau$$

**[E3]** devient : $H^B emi(n+1) = H^B emi(n) - G_o S_n - C_n$ avec $C_n$ terme de correction qui prend la valeur $c_n = u_n - u_{n-1} = e_n$

On recherche l'équation de récurrence pour l'algo_03 ci-dessous.

$$s_{n+k} = H^B emi(n) + u_n$$

$$s_{n+k+1} = H^B emi(n+1) + u_{n+1} = s_{n+k} - G_o s_n - e_n + e_{n+1}$$

d'où :

$$s_n = s_{n-1} - G_o s_{n-k-1} + e_{n-k} - e_{n-k-1} \qquad [E6]$$

équation de boucle échantillonnée.

L'équation de boucle analogique (respectivement échantillonnée) peut être analysée avec l'outil mathématique de transformée de Laplace (respectivement transformée en Z).

L'équation [E5] est une équation différentielle du 1$^{er}$ ordre avec retard pur, de la forme :

$$y'(t) + a\, y(t-\tau) = c$$

Bien que non linéaire, on peut approximer l'équation [E5] par une équation différentielle du 2ème ordre. On considère un système asservi continu d'entrée $e(t) = \dfrac{dT_B}{dt}(t)$ et de sortie $s(t) = f(t)$

Sa fonction de transfert s'écrit : $F(p) = c/(p + ae^{-\tau p})$

Utilisons le développement limité : $e^x = 1 + x + \dfrac{x^2}{2!} + \dfrac{x^3}{3!} + \ldots$

Alors,

$$F(p) \approx c / \left( a + (1 - a\tau)\, p + a\, \frac{\tau^2}{2!}\, p^2 \right)$$

On retrouve l'équation caractéristique correspondant à l'équation différentielle du 2ème ordre suivante :

$$a\, \frac{\tau^2}{2!}\, y''(t) + (1 - a\tau)\, y'(t) + a\, y(t) = c$$

Rappel sur la solution d'une équation différentielle du second ordre :

$$y'' + 2\lambda y' + \omega_o^2\, y = c$$

d'équation caractéristique : $p^2 + 2\zeta\omega_o p + \omega_o^2 = 0$

Il existe 3 régimes, selon la valeur du coefficient d'amortissement :

- Régime pseudo-périodique ($\zeta < 1$) : le système converge vers sa position d'équilibre avec des oscillations dont l'amplitude décroît exponentiellement,
- Régime apériodique ($\zeta > 1$),
- Régime critique ($\zeta = 1$) : le système rejoint le plus vite sa position d'équilibre.

En régime transitoire, en régime pseudo-périodique, la réponse à un échelon est donnée par :

$$s(t) = 1 - A\, e^{-\lambda t}\, \sin(\omega t + \varphi)$$

avec le coefficient d'amortissement : $\zeta = \dfrac{\lambda}{\omega_0}$, $A = \dfrac{1}{\sqrt{1-\zeta^2}}$

$$\omega = \sqrt{\omega_0^2 - \lambda^2}\ \text{et}\ \varphi = \text{arctg}\left(\frac{\sqrt{1-\zeta^2}}{\zeta}\right)$$

La réponse à un échelon est sur la Figure 5.
La réponse à un échelon de la "boucle longue" peut être approximée par la transformée de Laplace suivante :

$$S(p) = c / \left\{ p\left( a + (1-a\tau)\,p + a\,\frac{\tau^2}{2!}\,p^2 \right) \right\}$$

La valeur de l'erreur $\varepsilon$ de boucle en régime permanent est obtenue en appliquant le théorème de la valeur finale :

$$\lim (t \to \infty)\, s(t) = \lim (p \to 0)\, pS(p).$$

ici, on a : $\varepsilon = c/a = \left( \dfrac{dT_B}{dt}(t) - C(t) \right) / G_0$

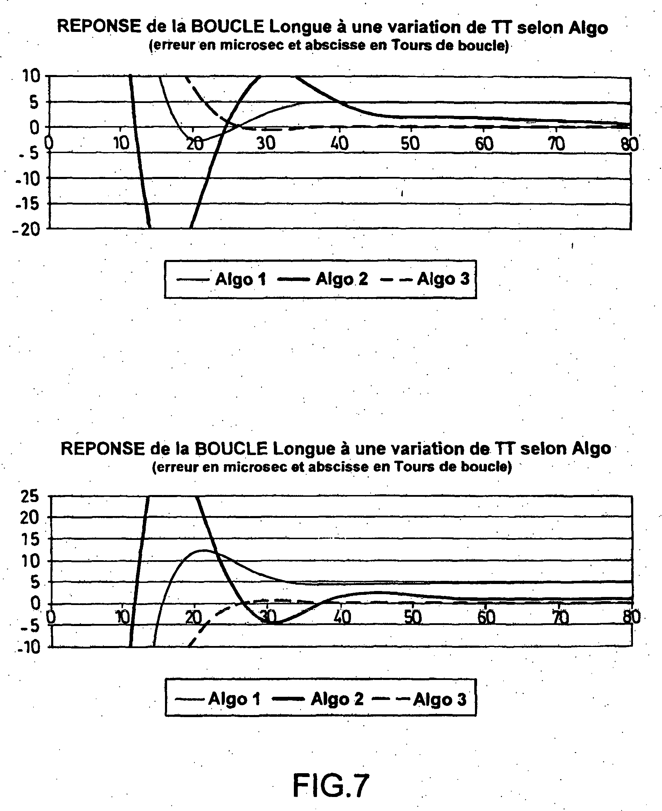

Sur la figure 7, on compare les Temps de Convergence obtenus avec la Boucle longue selon l'art antérieur l'Etat-de-l'Art, représentés par les Algo_01 et Algo_02 et obtenu avec la Boucle Longue obtenue, mettant en oeuvre le procédé selon l'invention, Algo_03, qui utilise le canal DIFF.

**Cas ALGO_01**

L'asymptote correspond à l'erreur $\varepsilon$ de boucle en régime permanent $c/a = \dfrac{dT_B}{dt} / G_0.$

Par exemple, pour $\frac{dT_B}{dt}$ = 82 ns/s , pour latence=4 s et pour gain Go = 0.25 on a $\varepsilon$ = 0,328 $\mu$s.

A partir de Go $\tau$ = 0.1, on atteint le régime critique, puis on a, ensuite, le régime apériodique pour des gains inférieurs. '

Les courbes de la Figure 5 ci-avant montrent l'allure de la convergence de boucle et l'erreur de selon les paramètres $\tau$ et Go.

**Cas ALGO_02**

Pour annuler complètement l'erreur, on ajoute un intégrateur dans **la chaîne**.

En effet, F(p) non corrigé est du type c/(a+bp+p$^2$) et la réponse à un échelon vaut S(p) = F /p d'où $\varepsilon$ = c/a.

En ajoutant un intégrateur, on ajoute un terme 1/p dans l'équation différentielle, qui repasse au numérateur de F(p) et qui annule la valeur asymptotique $\varepsilon$.

**Cas ALGO_03**

L'asymptote correspond à l'erreur $\varepsilon$ de boucle permanente $c/a = (1/Go)(\frac{dT_B}{dt} - C(t))$

Avec C(t) = $\Delta$Hrec(t) qui suit la variation de $T_B$.

Ceci permet d'annuler l'erreur en régime permanent.

On gagne en temps de convergence (voir résultats comparatifs de la Figure 7) et, de plus, le gain de l'algorithme est indépendant des paramètres de perturbation du canal, tels que la latence ou la vitesse radiale du satellite (donnée par la position géographique relative de l'abonné par rapport au satellite et par la position du satellite dans sa course orbitale le long du huit dont la forme dépend de l'inclinaison du plan orbital par rapport à l'équateur mais aussi de l'excentricité d'orbite).

**Revendications**

1. Procédé de synchronisation dans un système de télécommunications par satellite transparent comprenant une station maître, NC, et une ou plusieurs stations abonné, NM, le système utilisant pour échanger les informations une forme d'onde de type à saut de fréquence orthogonale, un abonné, NM, et le maître, NC, échangeant des messages de demande d'heure et de réponse d'heure, l'heure d'émission de chaque abonné étant asservie par une boucle longue pilotée par le maître de manière à ce que tous les signaux du réseau arrivent sensiblement synchrones dans le répéteur du satellite, la station maître déterminant l'erreur de boucle $\Delta B(n)$ d'un abonné en déterminant le décalage entre l'instant de réception de la demande d'heure de la station abonné et l'instant de réception de sa propre balise horaire, où :

   • une station abonné prend en compte la valeur de décalage, erreur de boucle, reçue dans la réponse d'heure et la vitesse de variation du trajet satellite-porteur déduite de la réception de la balise horaire, pour procéder à un recalage de son heure d'émission de la nouvelle demande d'heure, et
   • la station maître ou une station abonné compare la valeur de l'erreur de boucle mesurée à une valeur seuil et dès que la valeur absolue de l'erreur de boucle, pour une station abonné donnée, est inférieure ou égale à la valeur seuil, la station maître autorise ladite station abonné à émettre son trafic.

2. Procédé selon la revendication 1, **caractérisé en ce que** l'on détermine l'instant d'émission qui permet d'annuler l'erreur de boucle en régime permanent grâce à la mise en oeuvre à chaque tour de boucle, de l'algorithme suivant :

$$H^B_{emi}(n+1) = H^B_{emi}(n) - Go\ B(n-k) - C(n) \qquad \textbf{[E3]}$$

avec :
Go est le gain de boucle.
C(n) terme de correction qui est égal à :

$$C(n) = Hrec\ (n) - Hrec\ (n-1)$$

$H^B$emi : heure d'émission de la station abonné

B(n) erreur de boucle pour la station abonné B.

« k » : latence de la boucle exprimée en nombre de tours de boucle

Hrec : heure de réception par l'abonné, de la balise horaire émise par le maître.

3. Procédé selon la revendication 1, **caractérisé en ce que** l'on exécute l'étape de comparaison de l'erreur de boucle à la valeur seuil sur plusieurs tours de boucle.

4. Procédé selon la revendication 1, **caractérisé en ce que** l'on choisit la valeur de seuil est choisie inférieure à la durée du trou de palier de la forme d'onde.

5. Procédé selon l'une des revendications 1 à 4, **caractérisé en ce que** la forme d'onde est une forme d'onde OFHMA.

6. Système permettant de synchroniser une station maître, NC, et une ou plusieurs stations abonné, NM, dans un réseau de communications sans fil, comportant au moins un processeur disposé au niveau de chacune des stations abonné adapté à calculer le recalage d'heure d'émission de chaque abonné en tenant compte de la vitesse de variation du trajet satellite-abonné, un processeur côté station maître adapté à mesurer l'erreur de boucle et un processeur adapté à comparer la valeur de l'erreur à une valeur seuil et dès que la valeur d'erreur de boucle, pour une station abonné est inférieure ou égale à la valeur seuil, à donner l'autorisation à ladite station abonné d'émettre son trafic.

7. Système selon la revendication 6, **caractérisé en ce que** le processeur adapté à comparer la valeur de l'erreur de boucle à la valeur seuil est disposé dans la station maître.

8. Système selon la revendication 6, **caractérisé en ce que** le processeur adapté à comparer la valeur de l'erreur de boucle à la valeur seuil est disposé dans une station abonné.

**Patentansprüche**

1. Synchronisationsverfahren in einem transparenten Satellitentelekommunikationssystem, das eine Hauptstation (NC) und eine oder mehrere Teilnehmerstationen (NM) umfasst, wobei das System eine Wellenform des orthogonalen Frequenzsprungtyps zum Austauschen von Informationen benutzt, wobei eine Teilnehmerstation (NM) und die Hauptstation (NC) Timing-Anforderungs- und Timing-Antwortnachrichten austauschen, wobei das Sende-Timing jedes Teilnehmers durch eine von der Hauptstation gesteuerte lange Schleife geregelt wird, so dass alle Signale des Netzwerks auf im Wesentlichen synchrone Weise am Repeater des Satelliten ankommen, wobei die Hauptstation den Schleifenfehler ΔB(n) eines Teilnehmers durch Ermitteln des Versatzes zwischen dem Zeitpunkt des Empfangs der Timing-Anforderung von der Teilnehmerstation und dem Zeitpunkt des Empfangs von seinem eigenen Taktgeber ermittelt, wobei:

• eine Teilnehmerstation den in der Timing-Antwort empfangenen, als Schleifenfehler bezeichneten Versatzwert und die vom Empfang des Taktgebers abgeleitete Variationsgeschwindigkeit des Satellitenträgerpfads berücksichtigt, um das Sende-Timing auf die neue Timing-Anforderung zu justieren, und

• die Hauptstation oder eine Teilnehmerstation den gemessenen Schleifenfehlerwert mit einem Schwellenwert vergleicht, und sobald der absolute Wert des Schleifenfehlers für eine gegebene Teilnehmerstation gleich oder kleiner als der Schwellenwert ist, die Hauptstation die Teilnehmerstation zum Senden ihres Verkehrs autorisiert.

2. Verfahren nach Anspruch 1, **dadurch gekennzeichnet, dass** der Sendezeitpunkt ermittelt wird, so dass der Schleifenfehler mittels des folgenden Algorithmus bei jedem Durchlaufen der Schleife in einem stabilen Zustand storniert werden kann:

$$H^B emi(n+1) = H^B emi(n) - Go\ B(n-k) - C(n)\ [E_3],$$

wobei:

Go die Schleifenverstärkung ist;

C(n) ein Korrekturterm ist, der Folgendem entspricht:

$$C(n) = Hrec(n) - Hrec(n-1);$$

$H^B$emi das Sende-Timing der Teilnehmerstation ist;

B(n) der Schleifenfehler für die Teilnehmerstation B ist;

"k" die Latenz der Schleife ist, ausgedrückt als die Anzahl von Schleifendurchläufen;

Hrec das Empfangs-Timing, durch die Teilnehmerstation, des von der Hauptstation gesendeten Taktgebers ist.

3. Verfahren nach Anspruch 1, **dadurch gekennzeichnet, dass** der Schritt des Vergleichens des Schleifenfehlers mit dem Schwellenwert über mehrere Schleifendurchläufe erfolgt.

4. Verfahren nach Anspruch 1, **dadurch gekennzeichnet, dass** der Schwellenwert so gewählt wird, dass er kleiner als die Dauer der Stufenlücke der Wellenform ist.

5. Verfahren nach einem der Ansprüche 1 bis 4, **dadurch gekennzeichnet, dass** die Wellenform eine OFHMA-Wellenform ist.

6. System zum Synchronisieren einer Hauptstation (NC) und einer oder mehrerer Teilnehmerstationen (NM) in einem drahtlosen Kommunikationsnetz, das Folgendes umfasst: wenigstens einen Prozessor, der auf jeder der Teilnehmerstationen angeordnet und zum Berechnen der Justierung des Sende-Timing jedes Teilnehmers unter Berücksichtigung der Geschwindigkeitsvariation des Satellitenteilnehmerpfades ausgelegt ist, einen Prozessor neben der Hauptstation, der zum Messen des Schleifenfehlers ausgelegt ist, und einen Prozessor zum Vergleichen des Wertes des Fehlers mit einem Schwellenwert und, sobald der Schleifenfehlerwert für eine Teilnehmerstation gleich oder kleiner als der Schwellenwert ist, zum Geben der Autorisierung für die Teilnehmerstation zum Senden ihres Verkehrs.

7. System nach Anspruch 6, **dadurch gekennzeichnet, dass** der zum Vergleichen des Schleifenfehlerwertes mit dem Schwellenwert ausgelegte Prozessor in der Hauptstation angeordnet ist.

8. System nach Anpruch 6, **dadurch gekennzeichnet, dass** der zum Vergleichen des Schleifenfehlerwertes mit dem Schwellenwert ausgelegte Prozessor in einer Teilnehmerstation angeordnet ist.

## Claims

1. A method for synchronisation in a transparent satellite telecommunication system comprising a master station (NC) and one or more subscriber stations (NM), said system using a waveform of the orthogonal frequency hop type to exchange information, a subscriber (NM) and said master (NC) exchanging timing request and timing response messages, the transmission timing of each subscriber being servo-controlled by a long loop controlled by said master, so that all of the signals of the network arrive in a substantially synchronous manner in the repeater of the satellite, said master station determining the loop error ΔB(n) of a subscriber by determining the shift between the moment of reception of the timing request from said subscriber station and the moment of reception of its own clock beacon, where:

  • a subscriber station takes into account the shift value, referred to as loop error, received in the timing response and the speed of variation of the satellite-carrier path deduced from the reception of the clock beacon, so as to adjust its transmission timing to the new timing request, and

  • said master station or a subscriber station compares the value of the measured loop error with a threshold value and as soon as the absolute value of the loop error, for a given subscriber station, is less than or equal to the threshold value, said master station authorises said subscriber station to transmit its traffic.

2. The method according to claim 1, **characterised in that** the transmission moment is determined, which allows the loop error to be cancelled in a steady state by virtue of the implementation of the following algorithm during each run of the loop:

$$H^Bemi(n+1) = H^Bemi(n) - Go\ B(n-k) - C(n)\ [E_3],$$

where:

Go is the loop gain;

C(n) is a correction term that is equal to:

$$C(n) = Hrec(n) - Hrec(n-1);$$

$H^Bemi$ is the transmission timing of the subscriber station;

B(n) is the loop error for the subscriber station B;

"k" is the latency of the loop expressed as the number of runs of the loop;

Hrec is the timing of reception, by the subscriber, of the clock beacon transmitted by said master.

3. The method according to claim 1, **characterised in that** the step of comparing the loop error with the threshold value is executed over several runs of the loop.

4. The method according to claim 1, **characterised in that** the threshold value is selected so as to be less than the duration of the gap in the stage of the wave form.

5. The method according to any one of claims 1 to 4, **characterised in that** the waveform is an OFHMA waveform.

6. A system for synchronising a master station (NC) and one or more subscriber stations (NM) in a wireless communications network, comprising at least one processor disposed at each of the subscriber stations and designed to calculate the adjustment of transmission timing of each subscriber by taking into account the variation of speed of the satellite-subscriber path, a processor on the master station side being designed to measure the loop error and a processor being designed to compare the value of the error with a threshold value and, as soon as the loop error value for a subscriber station is less than or equal to the threshold value, to provide the authorisation to said subscriber station to transmit its traffic.

7. The system according to claim 6, **characterised in that** the processor designed to compare the value of the loop error with the threshold value is disposed in the master station.

8. The system according to claim 6, **characterised in that** the processor designed to compare the loop error value with the threshold value is disposed in a subscriber station.

FIG.1

EP 1 875 634 B1

FIG.2

FIG.3

NC

Acquisition
avec connaissance du TT

NM

➤ Emission d'heure implicite
permanente avec Ephémérides
explicites rafraîchies

DIFF

➤ acquisition d'heure passive
+ démodulation des éphémérides
et calcul du TT initial (précis)

➤ Détection et début de
convergence de boucle

➤ Emission du message
de décalage

SYNC_EL

SYNCH_OUT

➤ Emission de 1er message
technique anticipé du TT initial

➤ Réception de la consigne de
recalage

➤ Fin de convergence
de boucle

➤ message d'autorisation
de trafic émission

SYNC_EL

SYNCH_OUT

➤ Autorisation de trafic émission

# FIG.4

FIG.5

FIG.6

**REPONSE de la BOUCLE Longue à une variation de TT selon Algo**
(erreur en microsec et abscisse en Tours de boucle)

—— Algo 1 —— Algo 2 — — Algo 3

**REPONSE de la BOUCLE Longue à une variation de TT selon Algo**
(erreur en microsec et abscisse en Tours de boucle)

—— Algo 1 —— Algo 2 — — Algo 3

FIG.7

18

FIG.8

## RÉFÉRENCES CITÉES DANS LA DESCRIPTION

**Documents brevets cités dans la description**

- US 4811365 A